# EUROPÄISCHE PATENTSCHRIFT

(11) **EP 0 502 233 B1**
(45) Veröffentlichungstag und Bekanntmachung des Hinweises auf die Patenterteilung: **19.10.1994**
(21) Anmeldenummer: 91103456.9
(22) Anmeldetag: 07.03.1991
(51) Int. Cl.: B25J 9/04, B21D 43/10

(54) **Transportautomat, insbesondere zum Transportieren von Werkstücken zwischen Pressen**
Automated transport device, particularly for transferring workpieces between presses
Automate de transport, particulièrement pour le transfert de pièces entre presses

(43) Veröffentlichungstag der Anmeldung: 09.09.1992
(73) Patentinhaber: THR-BILSING GmbH, D-45659 Recklinghausen (DE)
(72) Erfinder: Stuckmann, Otto, Dipl.-Ing., W-4350 Recklinghausen (DE); Bilsing, Alfred, Dipl.-Ing., W-5952 Attendorn (DE); Stanzel, Klaus, Techniker, W-5952 Attendorn (DE)
(74) Vertreter: Masch, Karl Gerhard, Dr.

(56) Entgegenhaltungen:
- DE-A- 2 834 244
- FR-A- 2 612 826
- GB-A- 2 232 655
- US-A- 3 984 009
- US-A- 4 095 481

## Beschreibung

Die Erfindung betrifft einen Transportautomaten, insbesondere zum Transportieren von Werkstücken zwischen Pressen, bestehend aus einem mit Hilfe eines ersten Schwenkantriebes um eine vertikale Achse und mit Hilfe eines zweiten Schwenkantriebes um eine horizontale Achse verschwenkbar auf einem stationären Maschinenfuß gelagerten Horizontalkragarm und einem mit Hilfe eines am Horizontalkragarm befestigten linearen Verstellantriebes im wesentlichen horizontal vor- und zurückbewegbaren Greiferkopf mit einer um zumindest eine Achse verschwenkbar gelagerten Greiferhand, wobei die vertikale und die horizontale Schwenkachse des Horizontalkragarmes in einer gemeinsamen Ebene liegen.

Solche Transportautomaten werden in erheblichem Umfang beispielsweise in der Automobilindustrie eingesetzt und sind in verschiedenen Ausführungen bekannt (vgl. DE-C-30 24 432). Der den Horizontalkragarm variabel verlängernde horizontale Verstellantrieb ist dort regelmäßig starr mit dem Horizontalkragarm verbunden bzw. in letzteren integriert. Selbst bei optimaler Auslegung und Programmierung lassen sich letztendlich den Transportzyklus verlängernde Störkräfte und -momente nicht vermeiden, weil der Greiferkopf einen vorgegegebenen Mindestabstand von der vertikalen Schwenkachse des Horizontalkragarmes nicht unterschreiten kann und jeder Raumpunkt, den der Greiferkopf einnehmen kann, nur durch eine einzige Stellung des Horizontalkragarmes und linearen Verstellantriebes erreichbar ist.

Bei einem anderen bekannten Transportautomaten (GB-A-2 232 655) ist zwar ein linearer Verstellantrieb mit Greiferkopf mit Abstand von einer vertikalen Schwenkachse eines Horizontalkragarmes mit Hilfe eines Schwenkantriebes um eine vertikale Achse verschwenkbar derart am Horizontalkragarm gelagert, daß sich der Horizontalkragarm einerseits und der lineare Verstellantrieb sowie der Greiferkopf andererseits bei Relativverschwenkung gegenseitig nicht behindern. Die zuvor geschilderten Nachteile gelten jedoch auch hier, weil der Horizontalkragarm auf einem weiteren Horizontalkragarm um eine vertikale Achse verschwenkbar gelagert ist, der in einer Säule lediglich heb- und senkbar gelagert ist, welche vom Greiferkopf nicht überfahrbar ist.

Der Erfindung liegt die Aufgabe zugrunde, eine Vorrichtung der eingangs genannten Art dahingehend zu verbessern, daß der Greiferkopf eine optimierbare Bewegung ausführen kann.

Hierzu lehrt die vorliegende Erfindung, daß der lineare Verstellantrieb mit Abstand von der vertikalen Schwenkachse des Horizontalkragarmes mit Hilfe eines dritten Schwenkantriebes um eine im wesentlichen vertikale Achse verschwenkbar derart auf und über dem Horizontalkragarm gelagert ist, daß sich der Horizontalkragarm einerseits und der lineare Verstellantrieb sowie der Greiferkopf andererseits bei Relativverschwenkung gegenseitig nicht behindern und die vertikale Schwenkachse des Horizontalkragarmes vom Grieferkopf überfahrbar ist.

Beim erfindungsgemäßen Transportautomaten bilden der Horizontalkragarm und der lineare Verstellantrieb durch das zwischen diesen beiden Bauteilen befindliche Gelenk einen Gelenkarm mit längenveränderlichem äußeren Arm. Auf diese Weise steht ein zusätzlicher Freiheitsgrad für die Bewegung des Greiferkopfes zur Verfügung, der die gewünschte Bewegungsoptimierung zuläßt. So kann der Greiferkopf auf einer geraden Linie über die vertikale Schwenkachse des Horizontalkragarmes hinweg bei gleichzeitiger Drehung des Greiferkopfes um 180° zwischen zwei Punkten bewegt werden, wobei die Geschwindigkeit des Greiferkopfes durch vektorielle Addition der Einzelgeschwindigkeiten über den Fahrbereich groß gehalten werden kann, wie es beim Transportieren von Werkstücken zwischen Pressen erwünscht ist. Im Ergebnis können durch leichtere Bauweise die bewegten Massen und die Positionierzeiten verringert werden.

Für die weitere Ausgestaltung bestehen im Rahmen der Erfindung mehrere Möglichkeiten. In der Praxis bewährt hat sich eine Ausführungsform, bei der der lineare Verstellantrieb eine an ihrem einen Ende den Greiferkopf tragende Stangenanordnung in einer auf dem Horizontalkragarm angeordneten Stangenführung aufweist. Die Antriebe können hydraulisch und/oder elektrisch ausgeführt sein. Für den linearen Verstellantrieb kann insoweit auch ein Linearmotor eingesetzt werden.

Im folgenden wird die Erfindung anhand einer ein Ausführungsbeispiel darstellenden Zeichnung näher erläutert. Es zeigen ., .
- Fig. 1: eine Seitenansicht eines Transportautomaten und
- Fig. 2: eine Aufsicht auf den Gegenstand der Fig. 1 in verschiedenen Stellungen.

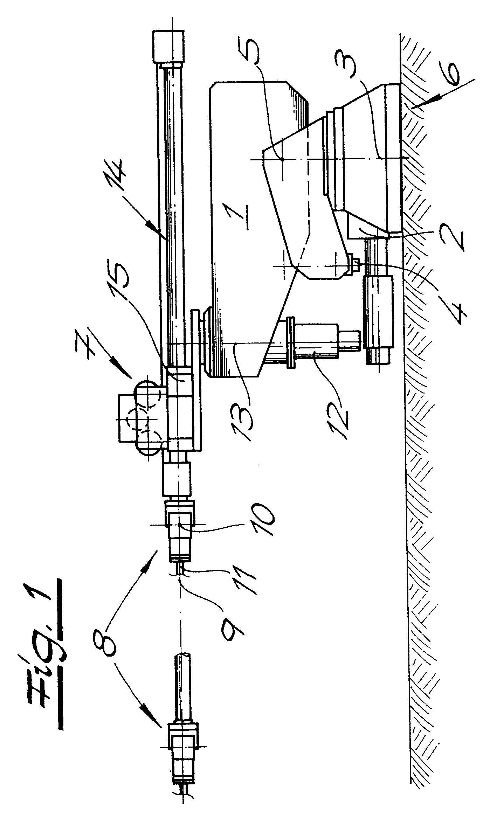

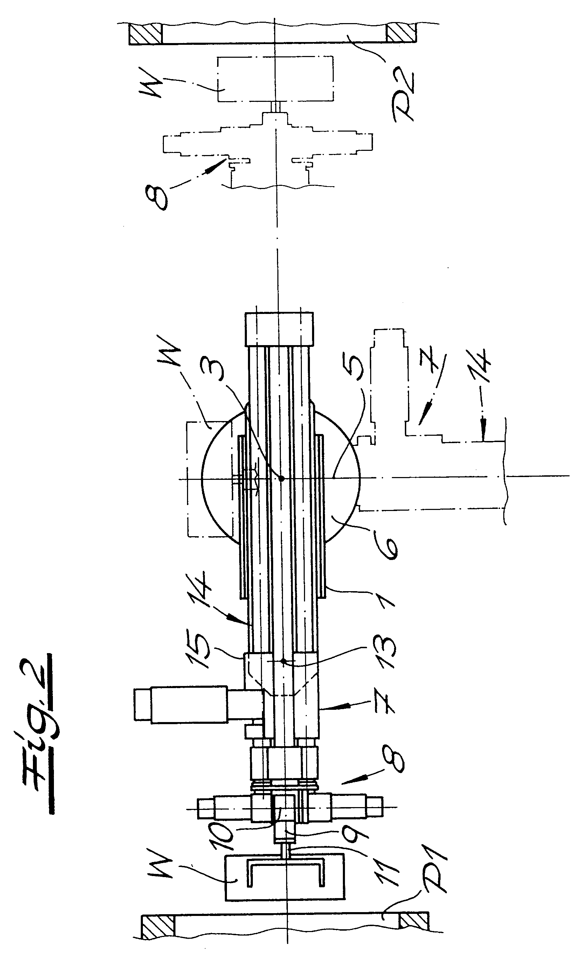

Der in den Figuren dargestellte Transportautomat dient zum Transportieren von Werkstücken W zwischen Pressen P1, P2 (vgl. Fig. 2). Der Transportautomat besteht in seinem grundsätzlichen Aufbau zunächst aus einem Horizontalkragarm 1, der mit Hilfe eines ersten Schwenkantriebes 2 um eine vertikale Achse 3 und mit Hilfe eines zweiten Schwenkantriebes 4 um eine horizontale Achse 5 verschwenkbar auf einem stationären Maschinenfuß 6 gelagert ist. Am Horizontalkragarm 1 ist ein linearer Verstellantrieb 7 befestigt, mit dessen Hilfe ein Greiferkopf 8 mit einer um zwei Achsen 9, 10 verschwenkbar gelagerten Greiferhand 11 im wesentlichen horizontal, d. h. bei Horizontalstellung des Horizontalkragarmes 1 horizontal vor- und zurückbewegbar ist. Die beiden Endstellungen des Greiferkopfes 8 bzw. der Greiferhand 11 sind in der Fig. 1 dargestellt. Der lineare Verstellantrieb 7 ist mit Abstand von der vertikalen Schwenkachse 3 des Horizontalkragarmes 1 mit Hilfe eines dritten Schwenkantriebes 12 um eine im wesentlichen vertikale, d. h. wiederum bei Horizontalstellung des Horizontalkragarmes 1 vertikale Achse 13 verschwenkbar auf dem Horizontalkragarm 1 gelagert, und zwar derart, daß sich der Horizontalkragarm 1 einerseits und der lineare Verstellantrieb 7 sowie der Greiferkopf 8 andererseits bei Relativverschwenkung gegenseitig nicht behindern. Mit anderen Worten sind der Horizontalkragarm 1 einerseits und der lineare Verstellantrieb 7 sowie der Greiferkopf 8 andererseits in unterschiedlichen Höhen angeordnet.

Wie man in der Fig. 1 erkennt, liegen die vertikale und die horizontale Schwenkachse 3 bzw. 5 des Horizontalkragarmes 1 in einer gemeinsamen Ebene, die senkrecht zur Zeichenebene verläuft. Der lineare Verstellantrieb 7 weist eine an ihrem einen Ende den Greiferkopf 8 tragende Stangenanordnung 14 in einer auf dem Horizontalkragarm 1 angeordneten Stangenführung 15 auf. Die Stangenanordnung 14 ist mit Hilfe eines im einzelnen nicht dargestellten Motors an der Stangenführung 15 vor- und zurückbewegbar.

Die Fig. 2 zeigt einen Bewegungszyklus des Transportautomaten beim Transportieren eines Werkstückes W zwischen zwei Pressen P1 und P2. Die Greiferhand 11 nimmt in der in der Fig. 2 linken Presse P1 das Werkstück W auf und der lineare Verstellantrieb 7 fährt das Werkstück W aus der Presse P1 aus. Gleichzeitig zu dieser Bewegung (zum Zweck der Erzeugung einer fließenden Bewegung) oder auch anschließend werden der Horizontalkragarm 1 um die vertikale Schwenkachse 3 im Uhrzeigersinn, der lineare Verstellantrieb 7 um die vertikale Achse 13 im Gegenuhrzeigersinn verschwenkt und zugleich der lineare Verstellantrieb 7 weiter zurückgezogen. Dabei überfährt der Greiferkopf 8 die vertikale Schwenkachse 3 des Horizontalkragarmes 1, wie das aus der Fig. 2 ersichtlich ist. Nachdem das Werkstück W im Zuge der weiteren Fortbewegung vor der zweiten Presse P2 angelangt ist, wird das Werkstück W anschließend lediglich durch weiteres Ausfahren des linearen Verstellantriebes 7 in der zweiten Presse P2 abgelegt. Insgesamt ist das Werkstück W lediglich längs einer Geraden zwischen den beiden Pressen P1, P2 transportiert und zugleich um 180° gedreht worden.

## Patentansprüche

1. Transportautomat, insbesondere zum Transportieren von Werkstücken (W) zwischen Pressen (P1, P2), bestehend aus einem mit Hilfe eines ersten Schwenkantriebes (2) um eine vertikale Achse (3) und mit Hilfe eines zweiten Schwenkantriebes (4) um eine horizontale Achse (5) verschwenkbar auf einem stationären Maschinenfuß (6) gelagerten Horizontalkragarm (1) und einem mit Hilfe eines am Horizontalkragarm (1) befestigten linearen Verstellantriebes (7) im wesentlichen horizontal vor- und zurückbewegbaren Greiferkopf (8) mit einer um zumindest eine Achse (9 bzw. 10) verschwenkbar gelagerten Greiferhand (11), wobei die vertikale und die horizontale Schwenkachse (3 bzw. 5) des Horizontalkragarmes (1) in einer gemeinsamen Ebene liegen, **dadurch gekennzeichnet,** daß der lineare Verstellantrieb (7) mit Abstand von der vertikalen Schwenkachse (3) des Horizontalkragarmes (1) mit Hilfe eines dritten Schwenkantriebes (12) um eine im wesentlichen vertikale Achse (13) verschwenkbar derart auf und über dem Horizontalkragarm (1) gelagert ist, daß sich der Horizontalkragarm (1) einerseits und der lineare Verstellantrieb (7) sowie der Greiferkopf (8) andererseits bei Relativverschwenkung gegenseitig nicht behindern und die vertikale Schwenkachse (3) des Horizontalkragarmes (1) vom Greiferkopf (8) überfahrbar ist.

2. Transportautomat nach Anspruch 1, dadurch gekennzeichnet, daß der lineare Verstellantrieb (7) eine an ihrem einen Ende den Greiferkopf (8) tragende Stangenanordnung (14) in einer auf dem Horizontalkragarm (1) angeordneten Stangenführung (15) aufweist.

3. Transportautomat nach Anspruch 1 oder 2, dadurch gekennzeichnet, daß die Antriebe (2, 4, 7, 12) hydraulisch und/oder elektrisch ausgeführt sind.

4. Transportautomat nach Anspruch 3, dadurch gekennzeichnet, daß der lineare Verstellantrieb (7) einen Linearmotor aufweist.

## Claims

1. A transport robot, particularly for transporting workpieces (W) between presses (P1, P2), consisting of a horizontal jib (1) which is mounted on a fixed machine base (6), which jib can be swung about a vertical axis (3) by means of a first swivelling drive (2) and can be swung about a horizontal axis (5) by means of a second swivelling drive (4), and a gripper head (8) which can be moved to and fro substantially horizontally by means of a linear adjusting drive (7) attached to the horizontal jib (1), which gripper head has a gripper hand (11) which is swivel-mounted about at least one axis (9; 10), wherein the vertical and the horizontal swivelling axes (3; 5) of the horizontal jib (1) lie in a common plane, characterised in that the linear adjusting drive (7) is mounted on and above the horizontal jib (1) so that it can swing by means of a third swivelling drive (12) about a substantially vertical axis (13) at a distance from the vertical swivelling axis (3) of the horizontal jib (1) in such a way that the horizontal jib (1) on the one hand and the linear adjusting drive (7) and also the gripper head (8) on the other hand do not obstruct each other during their relative swivelling and the vertical swivelling axis (3) of the horizontal jib (1) can be crossed by the gripper head (8).

2. A transport robot according to claim 1, characterised in that the linear adjusting drive (7) has a rod arrangement (14), which carries the gripper head (8) at one end, in a rod guide (15) disposed on the horizontal jib (1).

3. A transport robot according to claim 1 or 2, characterised in that the drives (2, 4, 7, 12) are of hydraulic and/or electrical design.

4. A transport robot according to claim 3, characterised in that the linear adjusting drive (7) comprises a linear motor.

## Revendications

1. Automate de manutention, notamment pour la manutention de pièces à usiner (W) entre des presses (P1, P2), comportant un bras horizontal en porte-à-faux (1) placé sur un pied de machine (6) fixe et pivotant autour d'un axe vertical (3) à l'aide d'un premier entraînement de pivotement (2) et autour d'un axe horizontal (5) à l'aide d'un deuxième entraînement de pivotement (4), et une tête de grappin (8) se déplaçant de façon essentiellement horizontale vers l'avant et vers l'arrière à l'aide d'un entraînement de réglage linéaire (7) fixé sur le bras horizontal en porte-à-faux (1), sur laquelle est placée une pince (11) pivotant autour d'au moins un axe (9 ou 10), les axes de pivotement vertical et horizontal (3 ou 5) du bras horizontal en porte-à-faux (1) se trouvant dans un même plan, caractérisé en ce que l'entraînement de réglage linéaire (7) positionné à distance de l'axe de pivotement vertical (3) du bras horizontal en porte-à-faux (1) et pivotant autour d'un axe sensiblement vertical (13) à l'aide d'un troisième entraînement de pivotement (12) est placé de telle sorte sur et au-dessus du bras horizontal en porte-à-faux (1) que le bras horizontal en porte-à-faux (1) d'une part et l'entraînement de réglage linéaire (7) ainsi que la tête de grappin (8) d'autre part ne se gênent pas mutuellement en cas de pivotement relatif et que l'axe de pivotement vertical (3) du bras horizontal en porte-à-faux (1) puisse être franchi par la tête de grappin (8).

2. Automate de manutention selon la revendication 1, caractérisé en ce que l'entraînement de réglage linéaire (7) comporte une tige (14) qui est placée dans un dispositif de guidage (15) disposé sur le bras horizontal en porte-à-faux (1) et qui porte à une de ses extrémités la tête de grappin (8).

3. Automate de manutention selon la revendication 1 ou 2, caractérisé en ce que les entraînements (2, 4, 7, 12) sont hydrauliques et/ou électriques.

4. Automate de manutention selon la revendication 3, caractérisé en ce que l'entraînement de réglage linéaire (7) comporte un moteur linéaire.
